# EUROPÄISCHE PATENTSCHRIFT

(11) **EP 2 886 392 B1**
(45) Veröffentlichungstag und Bekanntmachung des Hinweises auf die Patenterteilung: **20.02.2019**
(21) Anmeldenummer: 14004105.4
(22) Anmeldetag: 04.12.2014
(51) Int. Cl.: B60P 7/08

(54) **Zurrösen-Adapter**
Lashing eye adapter
Adaptateur d'illets d'arrimage

(30) Priorität: 17.12.2013 DE 102013020843
(43) Veröffentlichungstag der Anmeldung: 24.06.2015
(73) Patentinhaber: B. Strautmann & Söhne GmbH u. Co. KG, 49196 Bad Laer (DE)
(72) Erfinder: Strautmann, Philipp, 49080 Osnabrück (DE)
(74) Vertreter: Träger, Denis

(56) Entgegenhaltungen:
- DE-A1- 3 137 019
- US-A1- 2007 183 860
- US-A1- 2011 293 386

## Beschreibung

Die Erfindung betrifft eine Vorrichtung zur Befestigung von Spann- und/oder Zurrgurten an einem Fahrzeug, insbesondere einem Kipper oder dergleichen, wobei das Fahrzeug eine Plattform und mit dieser über obere Scharniere und untere Scharniere verbundene Bordwände umfasst, und wobei die unteren Scharniere eine lösbare Verbindung ausbilden, welche durch einen Scharnierhaken und einen an der Bordwand angeordneten Scharnierbolzen ausgebildet wird.

Fahrzeuge, die einen Ladeboden aufweisen, werden häufig universell zum Transport sowohl von Schüttgütern, wie Sand und Getreide, oder Stückgütern, wie Paletten oder Kisten, eingesetzt. Damit die Stückgüter gefahrlos transportiert werden können, ist es häufig erforderlich, die Güter mittels hierfür vorgesehener Spann- und/oder Zurrgurte zu sichern. Die Anbringung dieser Gurte wird wesentlich erleichtert, wenn hierfür spezielle Verzurrösen vorgesehen sind. Derartige Verzurrösen sind in der Regel am Ladeboden bzw. der Plattform des Fahrzeuges angeordnet.

Bekannt sind beispielsweise Verzurrösen, die auf den Ladeboden aufgeschraubt werden. Selbst wenn diese Verzurrösen abklappbar sind, stehen sie jedoch zumindest geringfügig über dem Ladeboden hervor und stören, wenn sie nicht gebraucht werden. Auch in der Ladefläche versenkt angeordnete Verzurrösen unterbrechen die Ladefläche, so dass diese nicht insgesamt plan ist und es zu Verschmutzungen im Bereich der Aussparungen kommen kann. Dies ist insbesondere dann der Fall, wenn feinkörniges Schüttgut, wie beispielsweise Sand oder Getreide transportiert wird. Nach dem Entladen, beispielsweise durch Abkippen, verbleiben Reste des feinkörnigen Materials im Bereich der Zurrösen bzw. in den zur Anbringung der Zurrösen vorgesehen Vertiefungen. Wird das Fahrzeug anschließend zum Transport von Stückgut eingesetzt, so kann hierdurch der freie Zugang zu den Verzurrösen bzw. die freie Beweglichkeit derselben eingeschränkt sein.

Aus DE 20 2010 004 433 U1 ist eine Vorrichtung zur Befestigung von Spann- und/oder Zurrgurten bekannt, bei der das Befestigungselement ein von einer Halteplatte begrenzter Einsteckraum ist, in welchen ein Zurring durch die Halteplatte hindurch einsteckbar ist. Bei der Halteplatte handelt es sich um ein im Wesentlichen bündig mit der jeweiligen Fahrzeugfläche abschließendes Element, in das der Zurring mittels eines dafür vorgesehenen Einsteckzapfens bei Bedarf einsteckbar ist. Damit ist der Zurring zwar bei Bedarf demontierbar, an der Plattform verbleiben jedoch die verschmutzungsanfälligen und damit störenden Aufnahmebereiche der Zurrringe.

Aus DE 102 06 763 B4 ist ein Zurring bekannt, der klappbar am äußeren Rand der Plattform angeordnet ist. Zwar verfügt die Ladeplattform hier bei in Ruheposition eingeschwenkten Verzurrösen über eine geschlossene plane Fläche ohne Vorsprünge, jedoch befinden sich bei Fahrzeugen, die auch zum Transport von Schüttgütern eingesetzt werden, am äußeren Rand der Plattform üblicherweise die Bordwände. Die aus DE 102 06 763 B4 bekannten Zurrringe sind jedoch für Plattformen, auf welche die Unterseite der Bordwände zur Abdichtung des Laderaums aufsitzen, ungeeignet, da hierdurch das äußere Plattformprofil unterbrochen wird und sich so Dichtigkeitsprobleme ergeben. Außerdem können die außen integrierten Zurrringe bei aufgesetzten Bordwänden nicht in Arbeitsposition hochgeklappt werden.

Weiterhin erfordern alle genannten Ausführungen spezielle Anpassungen der Plattform selbst. Soweit herstellerseitig sowohl Fahrzeuge mit Zurrösen-Option als auch ohne Zurrösen-Option angeboten werden sollen, ist somit die technische Auslegung und ggf. Bevorratung zweier Plattformvarianten erforderlich. Die nachträgliche Anpassung eines zunächst ohne Zurrösen-Option gefertigten Fahrzeuges bzw. der nachträgliche Anbau von Zurrösen ist nur mit ganz erheblichem Umbauaufwand möglich.

Aus DE 31 37 019 A1 ist ein ösenartiges Halteorgan zum Verzurren bekannt, welches an Fahrzeugen mit Ladefläche und Bordwänden ansetzbar ist. Dieses Halteorgan ist so in die Bordwand integriert, dass ein gegebenenfalls erforderliches Abklappen der Bordwände nicht behindert wird. Eine Anpassung der Ladefläche ist nicht erforderlich, da die Halteorgane nicht in die Ladefläche integriert sind. Allerdings sind spezielle Bordwände erforderlich, die Vertiefungen aufweisen, in denen die Halteorgane aufgenommen werden können. Ein Nachrüsten eines Fahrzeuges mit den in DE 31 37 019 A1 offenbarten Halteorganen kommt somit nur dann in Betracht, wenn die Bordwände insgesamt ausgewechselt werden.

Es stellt sich daher die Aufgabe, eine Vorrichtung vorzuschlagen, die einfach an- und abbaubar ist und deren Einsatz keine speziellen Anpassungen an Plattform und/oder Bordwänden erfordert. Die Ladefläche soll zum einen als geschlossene, plane Fläche erhalten bleiben, zum anderen soll im Bedarfsfall die sichere Verzurrung von Stückgut mittels Spann- und/oder Zurrgurten ermöglicht werden.

Diese Aufgabe wird gelöst durch eine Vorrichtung, die einen Adapter umfasst, der an seinem einen Ende eine zum Scharnierbereich der Plattform kompatible Aufnahme und an seinem anderen Ende eine zum Scharnierbolzen kompatible Aufnahme und weiterhin ein Halteelement zur Befestigung der Spann- und Zurrgurte aufweist.

Die erfindungsgemäße Vorrichtung wird im Folgenden auch als Zurrösen-Adapter bezeichnet.

Die Option, den Zurrösen-Adapter bedarfsweise verwenden zu können, ermöglicht es, das Fahrzeug selbst mit einer Standard-Plattform zu konzipieren und unabhängig vom späteren Verwendungszweck herzustellen. Wird das Fahrzeug als reines Schüttgut-Transportfahrzeug eingesetzt, so kann auf die im Schüttgut-Einsatz störenden Zurrösen komplett verzichtet werden. Damit ist das Fahrzeug kostengünstiger als ein Fahrzeug mit Zurrösen und zudem für den Schüttguteinsatz optimiert, da bei demontiertem Zurrösen-Adapter keine Störstellen auf der Plattform vorhanden sind, an denen sich Dreck und Schüttgutreste sammeln könnten.

Soll das Fahrzeug sowohl für den Schüttgut- als auch für den Stückgut-Transport eingesetzt werden, so können die Zurrösen-Adapter lose, bzw. in einer hierfür am Fahrzeug vorgesehenen Halterung, optional beigelegt werden. Das Fahrzeug kann dann je nach Bedarfsfall umgerüstet bzw. angepasst werden. Auch das Nachrüsten eines zunächst ohne Zurrösen-Adapter eingesetzten Fahrzeuges ist ohne Umbauaufwand am Fahrzeug selbst möglich.

Ein besonderer Vorteil des erfindungsgemäßen Zurrösen-Adapters liegt auch darin, dass dieser werkzeuglos an- und abgebaut werden kann. Die an der einen Seite zur Plattform und an der anderen Seite zum Scharnierbolzen einer Bordwand des Fahrzeuges kompatible Gestaltung der Adaptereinheit ermöglicht die Herstellung einer formschlüssigen Verbindung in diesem Koppelbereich.

Soweit das Fahrzeug zudem mit einer Zentralverriegelung zum Öffnen und Schließen der Bordwände ausgerüstet ist, ist es von Vorteil, wenn das Verriegelungsgestänge der Zentralverriegelung von der plattformseitigen Aufnahme des Zurrösen-Adapters umgriffen und ein mit dem Verriegelungsgestänge fest verbundener Scharnierhaken, der im Regelfall (bei Verwendung des Fahrzeuges ohne Einsatz von Zurrösen-Adaptern) die Fahrzeug-Bordwand an die Plattform zieht und verriegelt, mit dem Zurrösen-Adapter gekoppelt wird. Ebenso wie das Öffnen und Schließen der Bordwand werkzeuglos möglich ist, ist somit auch die Montage und Demontage der Zurrösen-Adapter an die Plattform werkzeuglos möglich.

In einer weiteren Ausführung kann der Zurrösen-Adapter ein Profilstück mit einer Innenkontur umfassen, welche kompatibel ist zur Außenkontur der Plattform um so in diesem Bereich eine formschlüssige Anlage zwischen Plattform und Zurrösen-Adapter zu ermöglichen. Dabei kann die formschlüssige Anlage zur Plattform-Außenkontur alternativ oder zusätzlich zu der zuvor genannten formschlüssigen Verbindung zum Zentralveriegelungsgestänge vorgesehen sein.

Von besonderem Vorteil ist es weiterhin, wenn der Zurrösen-Adapter einen Bolzen umfasst, welcher mit dem Scharnierhaken lösbar verbunden ist. Da der Scharnierhaken bestimmungsgemäß dafür vorgesehen ist, einen an der Aufbau-Bordwand angebrachten Scharnierbolzen zu halten und zu verriegeln ist der am Zurrösen-Adapter vorgesehene Bolzen sowohl hinsichtlich seiner Geometrie als auch seiner Anordnung am Adapter so ausgelegt, dass Geometrie und Lage des Bordwand-Scharnierbolzens nachempfunden werden. Mittels des Scharnierhakens kann somit entweder der Scharnierbolzen der Aufbau-Bordwand oder der Bolzen des Zurrösen-Adapters umgriffen werden.

Weiterhin ist es von Vorteil, wenn bei in Verriegelungsstellung befindlichem Scharnierhaken vom Scharnierhaken eine in Richtung Verriegelungsgestänge wirkende Spannkraft auf die Vorrichtung ausgeübt wird. Hierdurch wird es ermöglicht, den Zurrösen-Adapter in einem ersten Montage-Schritt zunächst spannungsfrei und unter Nutzung eines im Schnittstellenbereich von Adapter und Plattform vorgesehenen Spiels an die Plattform zu koppeln und ihn in einem zweiten Montage-Schritt fest an die Plattform heranzuziehen und form- und kraftschlüssig zu fixieren. Der Zurrösen-Adapter stützt sich somit durch die in Richtung Verriegelungsgestänge wirkende Kraft gegen das Gestänge sowie gegen die darüber angeordnete Unterseite der Plattform bzw. ggf. gegen Teile des Plattformrahmens ab. Die Spannkraft wird bewirkt, indem der Bolzen des Zurrösen-Adapters analog zum Scharnierbolzen der Aufbau-Bordwand vom Scharnierhaken umgriffen und an die Plattform gezogen wird.

In einer vorteilhaften Ausführung umfasst der Zurrösen-Adapter ein Adapterelement und ein Halteelement als lösbar miteinander verbunden Einzelteile. Beschädigte oder verschlissene Halteelemente können so einfach ausgetauscht werden. Von besonderem Vorteil ist es dabei, wenn die lösbare Verbindung werkzeuglos hergestellt werden kann.

Zur Herstellung der lösbaren Verbindung umfasst das Halteelement in einer Ausführung der Erfindung einen Verschlussbolzen und das Adapterelement eine Bohrung zur Aufnahme des Verschlussbolzens, so dass mittels des Verschlussbolzens das Aufnahmeelement an den Adapter gekoppelt werden kann. Halteelement und Verschlussbolzen können dabei in Art eines Kettenschlosses ausgeführt sein.

In einer Ausführung der Erfindung ist die Bordwandseitige Aufnahme des Zurrösen-Adapters hakenförmig ausgeführt. Dabei orientiert sich die Geometrie des Hakens an der Geometrie des an der Plattform bzw. dem Zentralverriegelungsgestänge angebrachten Scharnierhakens. Der an der Aufbau-Bordwand enthaltene Scharnierbolzen kann somit bei Einsatz des Zurrösen-Adapters an Stelle des Scharnierhakens vom dafür vorgesehenen Haken des Zurrösen-Adapters aufgenommen bzw. umgriffen.

Damit sich der am Zurrösen-Adapter angebrachte Haken nicht ungewollt vom Scharnierbolzen löst, was beispielsweise durch Erschütterungen während einer Transportfahrt bewirkt werden kann, ist es von Vorteil, wenn ein Verriegelungselement vorgesehen ist, mittels dessen die Öffnungsweite der hakenförmige Aufnahme reduziert bzw. blockiert werden kann. Als Verriegelungselement in Betracht kommt beispielsweise ein Überwurfbügel, eine Verschlussschraube oder eine Sperrklinke.

Besonders bevorzugt ist eine Ausführungsform, bei der das Verriegelungselement beweglich im oder am Zurrösen-Adapter gelagert ist, wobei die Beweglichkeit bei montiertem Verschlussbolzen blockiert und bei demontiertem Verschlussbolzen gewährleistet ist. Damit wird der Verriegelungs-Mechanismus an den Einsatz des Halteelementes gekoppelt, so dass sichergestellt ist, dass die Zurröse nur dann zu ihrem bestimmungsgemäßen Einsatz genutzt werden kann, wenn der Scharnierbolzen durch das Verriegelungselement im Haken des Zurrösen-Adapters verriegelt und damit gesichert ist.

Der erfindungsgemäße Zurrösen-Adapter wird im Folgenden anhand einer bevorzugten Ausführungsform erläutert, die in den Figuren der Zeichnung dargestellt ist. Darin zeigen:
- Fig. 1:: ein Fahrzeug mit Ladeplattform
- Fig. 2:: ein Eckbereich des in Fig. 1 dargestellten Fahrzeuges
- Fig. 3:: eine Detailansicht des Fahrzeuges mit montiertem Zurrösen-Adapter
- Fig. 4:: eine Detailansicht des Fahrzeuges ohne Zurrösen-Adapter
- Fig. 5:: eine Detailansicht des in Fig. 4 dargestellten Aufbaubereiches mit montiertem Zurrösen-Adapter
- Fig. 6:: die erfindungsgemäße Vorrichtung (Zurrösen-Adapter)
- Fig. 7:: den in Fig. 6 dargestellten Zurrösen-Adapter in einer angedeuteten Einbauposition

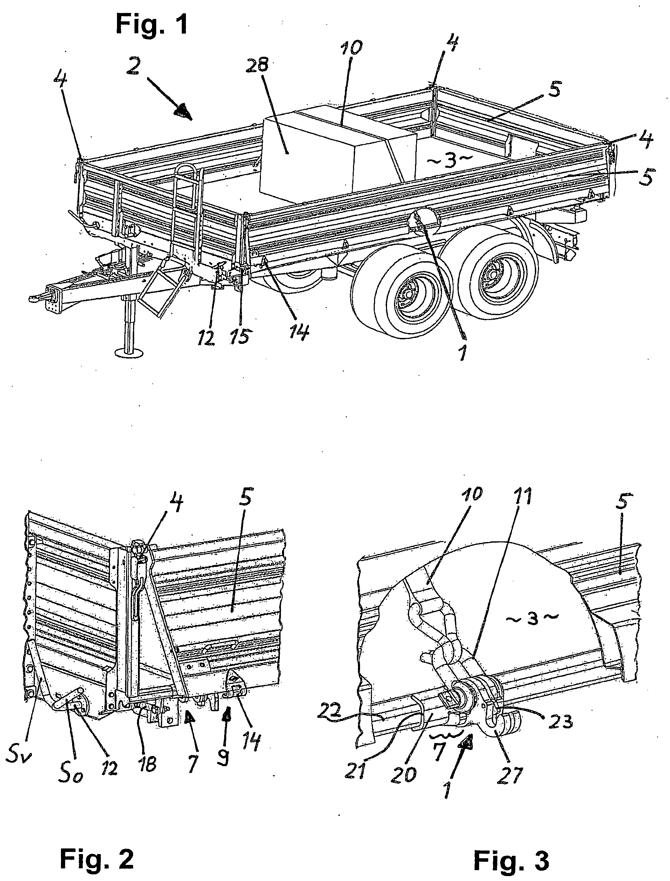

Figur 1 zeigt ein Fahrzeug 2 in Form eines üblicherweise im landwirtschaftlichen Bereich eingesetzten Dreiseiten-Kippers. Das Fahrzeug 2 umfasst eine rechteckige Plattform 3, die an ihren Seiten durch Bordwände 5 begrenzt ist, so dass ein kastenartiger Laderaum ausgebildet wird. Die seitlich angeordneten Bordwände 5 sowie die hintere Bordwand sind an ihrer die Plattform 3 kontaktierenden Seite mit Scharnieren 15 und an der entgegengesetzten Oberseite mit Scharnieren 4 ausgestattet, so dass sie bei Lösen der oberen Scharniere 4 nach unten hin und bei Lösen der unteren Scharniere 15 nach oben hin um eine durch die jeweils im Einsatz befindlichen Scharniere ausgebildete Drehachse schwenkbar sind. Die Scharniere 15 werden durch jeweils einen Scharnierhaken 13 und einen Scharnierbolzen 14 ausgebildet.

In Fig. 1 befinden sich die Scharniere 15 der seitlichen Bordwände 5 in einer geöffneten Position. Dabei sind Scharnierhaken 13 und Scharnierbolzen 14 voneinander gelöst. Zwischen den voneinander gelösten Scharnierhaken 13 und den Scharnierbolzen 14 sind die erfindungsgemäßen Zurrösen-Adapter 1 eingesetzt, deren Funktion und Anordnung weiter unten im Detail erläutert wird. Bei montierten Zurrösen-Adaptern 1 befinden sich die jeweiligen Bordwände 5 in einer leichten Schrägstellung, die durch die zwischen Plattform und Bordwand eingesetzten Zurrösen-Adapter bedingt ist.

Auf der Plattform 3 ist ein Ladungsstück 28 angeordnet. Bei dem Ladungsstück 28 kann es sich beispielsweise um eine Palette mit Ladung oder um eine Gitterbox handeln. Um zu verhindern, dass das Ladungsstück 28 während der Fahrt, insbesondere bei Kurvenfahrt und/oder Bremsmanövern, ins Rutschen gerät, ist es mit einem Spanngurt 10 gesichert. Der Spanngurt 10 umfasst Aufnahmehaken die mit den Zurrösen-Adaptern 1 verbunden werden können. Zu diesem Zweck sind an den Zurrösen-Adaptern 1 zu den Aufnahmehaken kompatible Halteelmente 11, bei denen es vorzugsweise um Ösen oder Ringe handelt, vorgesehen.

Fig. 2 zeigt einen vorderen Eckbereich des in Fig. 1 dargestellten Fahrzeuges 2. Das Fahrzeug 2 ist ausgestattet mit einer Zentralverriegelung 12. Das Gestänge verläuft in bekannter Weise im Wesentlichen unterhalb der Plattform 3 und ist an seinem Ende um 90° gebogen, so dass ein Hebel ausgebildet wird, der von einer Stellung So (offen) in eine Stellung Sv (verriegelt) verschwenkt werden kann. Am Verriegelungsgestänge 18 sind Scharnierhaken 13 fest angebracht, so dass durch Schwenken des Zentralverriegelungshebels die Scharnierhaken 13 mit bewegt werden und die an der Bordwand 5 angebrachten Scharnierbolzen 14 gelöst bzw. fixiert werden können.

Fig. 3 zeigt eine Detailansicht des Fahrzeuges 2 mit montiertem Zurrösen-Adapter 1. Der Zurrösen-Adapter 1 umfasst ein Profilstück 20 dessen Innenkontur 21 der Außenkontur 22 der Plattform 3 entspricht und an dieser anliegt. Der Spanngurt 10 ist mittels eines an ihm befestigten Hakens in ein Halteelement 11 eingeklinkt. Bei dem Halteelement 11 handelt es sich im Ausführungsbeispiel um einen Schäkel in Form eines U-förmigen Bügels, der mit einem Schraubbolzen ausgestattet ist.

Die in Fig. 3 nicht dargestellte Ladung ist somit gesichert und das Fahrzeug für den Stückgut-Transporteinsatz bereit. Die Bordwand 5 ist zur Verdeutlichung dieser EinsatzStellung ausgeschnitten dargestellt. Bei in Figur 3 vollständig dargestellter Bordwand 5 wäre ergänzend ersichtlich, dass sich in dieser Stellung der an der Bordwand 5 angebrachte Scharnierbolzen 14 innerhalb des Öffnungsbereiches des Hakens 27 befinden würde, wobei die Sicherung durch ein am Zurrösen-Adapter 1 schwenkbar angebrachtes Verriegelungselement 23 erfolgt.

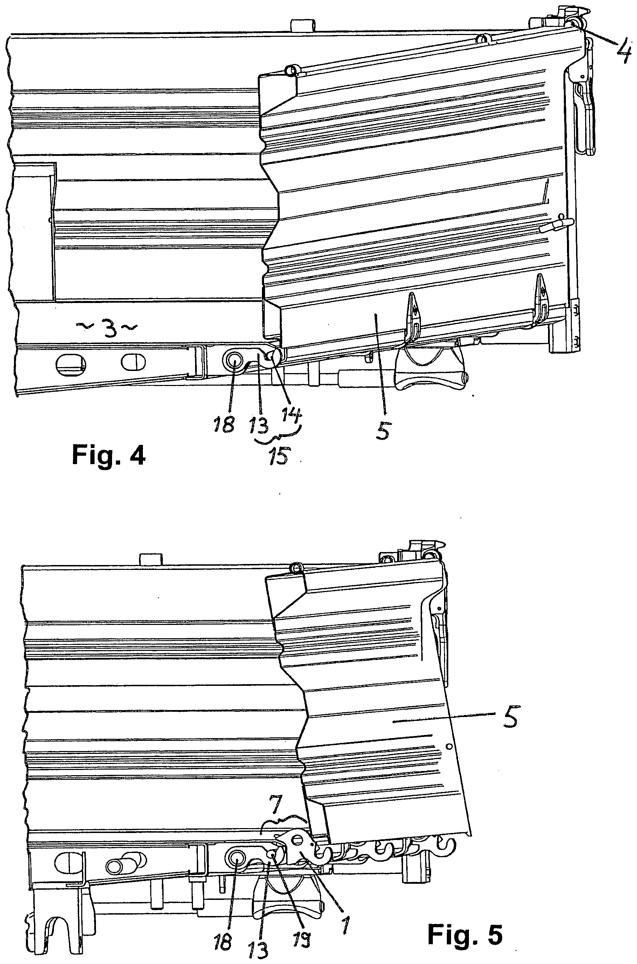

Fig. 4 zeigt eine Detailansicht des Fahrzeuges 2 ohne Zurrösen-Adapter in einer Schnittdarstellung. Der Scharnierhaken 13 ist fest mit dem Verrieglungsgestänge 18 verbunden und umgreift den Scharnierbolzen 14, der an der Bordwand 5 angebracht ist. Die Bordwand 5 ist somit geschlossen und verriegelt, so dass das Fahrzeug für den Schüttgut-Transporteinsatz bereit ist.

Fig. 5 zeigt das Fahrzeug 2 nach der Umrüstung von Schüttgut- auf Stückgut-Transporteinsatz. Die Umrüstung erfolgt, indem, nach Lösen der Zentralverrieglung 12 und damit der in einem Scharnierbereich 9 angeordneten Scharnierbolzen 14, zunächst die Bordwand 5 nach außen geschwenkt wird. An den Scharnierbolzen 14 wird ein Zurrösen-Adapter 1 mit demontiertem Halteelement 11 eingehängt. Das Halteelement 11 wird anschließend mittels des Verschlussbolzens 24 montiert. Hierzu wird dieser sowohl durch eine am Halteelement 11 vorgesehene Bohrung als auch durch eine am Zurrösen-Adapter 1 vorgesehene Bohrung 25 gesteckt. Das Verriegelungselement 23 ist so dimensioniert und schwenkbar angebracht, dass es bei demontiertem Verschlussbolzen 24 in den Innenbereich der Bohrung 25 einschwenken kann, dabei den Öffnungsbereich des Hakens 27 freigibt und so das Einhängen des Scharnierbolzens 14 in den Hakens 27 ermöglicht. Nach Einhängen des Hakens 27 ist das Verrieglungselement 23 aus dem Bereich der Bohrung 25 heraus geschwenkt, so dass nunmehr der Verschlussbolzen 24 in die Bohrung 25 gesteckt werden kann. Bei eingestecktem Verriegelungsbolzen 24 ist das Verriegelungselement 23 blockiert. Zwangsweise befindet sich in dieser Position ein Teil des Verriegelungselementes 23 im Öffnungsbereich des Hakens 27 und sichert so den Scharnierbolzen 14.

Der an der Bordwand 5 nunmehr eingehängte und gesicherte Zurrösen-Adapter 1 umfasst ein zu diesem Zeitpunkt freies Ende 6 und eine an diesem Ende vorgesehene, zum Plattformbereich kompatible, Aufnahme 16. Die Aufnahme 16 wird auf die Plattform 3 unter Ausnutzung eines dafür vorgesehenen Spielbereiches lose aufgesteckt. Da die Bordwand 5 leicht schräg hängt, trägt das Eigengewicht der Bordwand 5 dazu bei, die Bordwandunterkante und damit den Zurrösen-Adapter 1 in Richtung Plattform 3 zu drücken, wodurch die Montage erleichtert wird.

Nachdem der erste Zurrösen-Adapter 1 lose eingesetzt ist, werden weitere Zurrösen-Adapter 1 montiert, indem sie vorzugsweise zunächst mit ihrer Aufnahme 16 in die Scharnierbereiche 7 der Plattform 3 eingesetzt und dann erst mit den Scharnierbolzen 14 der Bordwände 5 verbunden werden.

Durch Verschwenken des Zentralverriegelungshebels aus der Stellung So (offen) in die Stellung Sv (verriegelt) werden die am Verriegelungsgestänge 18 angebrachten Scharnierhaken 13 verschwenkt und umgreifen einen am Zurrösen-Adapter 1 vorgesehenen Bolzen 19. Die Bauteile sind dabei so angeordnet und dimensioniert, dass im Zuge der Schwenkbewegung des Scharnierhakens 13 ein Anziehen des Bolzens 19 in Richtung Verriegelungsgestänge 18 bewirkt wird, so dass das zunächst zwischen Plattform 3 und Zurrösen-Adapter 1 vorhandene Spiel beseitigt und der Zurrösen-Adapter 1 mittels einer Kraft F gegen die Plattform 3 gedrückt wird.

Auf analoge Art und Weise können an weitere Plattform-Seiten weitere Zurrösen-Adapter 1 angebracht werden.

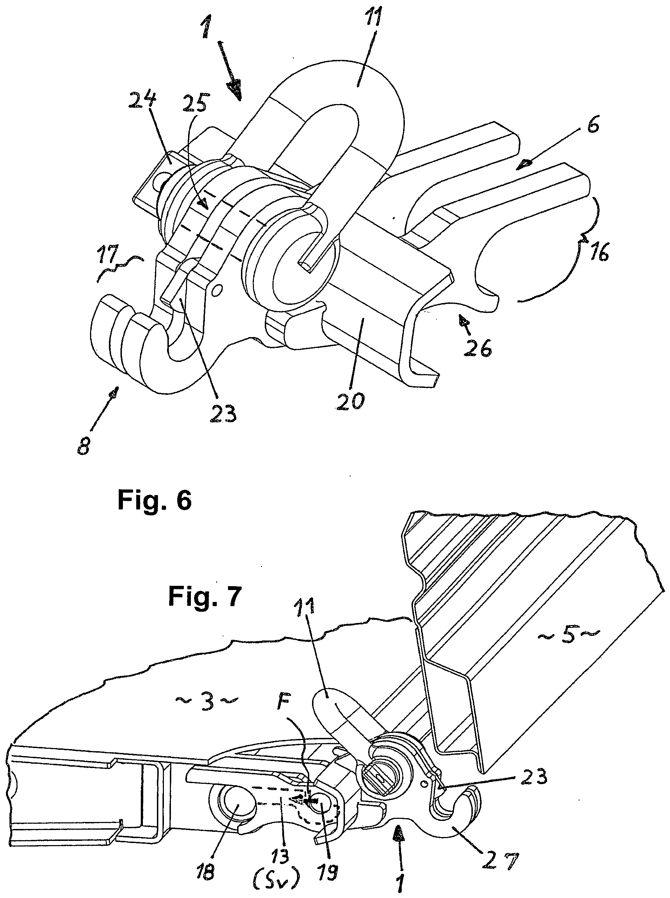

Fig. 6 zeigt eine Ausführungsform des erfindungsgemäßen Zurrösen-Adapter 1. Der Zurrösen-Adapter 1 umfasst ein Adapter-Element 26, an welchem das Halteelement 11 demontierbar befestigt ist. Die Befestigung erfolgt durch den Verschlussbolzen 24 um dessen Mittenachse das Halteelement 11 beweglich gelagert ist. Das Adapterelement 26 weist an seinem einen Ende 8 die zum Scharnierbolzen 14 der Bordwand 5 kompatible Aufnahme 17 und an seinem anderen Ende 6 die zum Scharnierbereich 7 der Plattform 3 kompatible Aufnahme 16 auf. Weiterhin umfasst das Adapterelement 26 das zum Plattformprofil kompatible Profilstück 20. Das Adapterelement 26 ist im Ausführungsbeispiel als Schweißbaugruppe gestaltet und umfasst die Aufnahmen 16 und 17, die jeweils aus einem Paar speziell zugeschnittener Einzelteile bestehen sowie das Profilstück 20.

Fig. 7 zeigt den in Fig. 6 dargestellten Zurrösen-Adapter 1 in einer angedeuteten Einbauposition. Der Haken 27 umgreift den Scharnierbolzen 14, der durch das in den Öffnungsbereich des Hakens 27 verschwenkte Verriegelungselement 23 gesichert ist. Der Scharnierhaken 13 befindet sich in der Verriegelungsstellung Sv und übt eine Kraft F auf den Bolzen 19 des Zurrösen-Adapters 1 aus, so dass dieser in Richtung Verriegelungsgestänge 18 gezogen wird.

**Bezugszeichenliste**

| | |
|---|---|
| 1 | Zurrösen-Adapter |
| 2 | Fahrzeug |
| 3 | Plattform |
| 4 | Scharnier |
| 5 | Bordwand |
| 6 | Ende |
| 7 | Scharnierbereich (zur Plattform) |
| 8 | Ende |
| 9 | Scharnierbereich (zur Bordwand) |
| 10 | Spanngurt |
| 11 | Halteelement |
| 12 | Zentralverriegelung |
| 13 | Scharnierhaken |
| 14 | Scharnierbolzen |
| 15 | Scharnier |
| 16 | Aufnahme (zum Plattformbereich kompatibel) |
| 17 | Aufnahme (zum Scharnierbolzen 14 kompatibel) |
| 18 | Verriegelungsgestänge |
| 19 | Bolzen |
| 20 | Profilstück |
| 21 | Innenkontur |
| 22 | Außenkontur |
| 23 | Verriegelungselement |
| 24 | Verschlussbolzen |
| 25 | Bohrung |
| 26 | Adapterelement |
| 27 | Haken |
| 28 | Ladungsstück |
| | |
| Sv | Stellung verriegelt |
| So | Stellung offen |
| F | Spannkraft |

## Patentansprüche

1. Vorrichtung zur Befestigung von Spann- und/oder Zurrgurten (10) an einem Fahrzeug (2), wobei das Fahrzeug (2) eine Plattform (3) und mit dieser über obere Scharniere (4) und untere Scharniere (15) verbundene Bordwände (5) umfasst, und wobei die unteren Scharniere (15) eine lösbare Verbindung ausbilden, welche durch einen Scharnierhaken (13) und einen an der Bordwand (5) angeordneten Scharnierbolzen (14) ausgebildete wird, und wobei die Vorrichtung einen Adapter (26) umfasst, der an seinem einen Ende (8) eine zum Scharnierbolzen (14) kompatible Aufnahme (17) aufweist und wobei die Vorrichtung (1) weiterhin ein Halteelement (11) zur Befestigung der Spann- und Zurrgurte (10) aufweist, **dadurch gekennzeichnet, dass** der Adapter (26) an seinem anderen Ende (6) eine zum Scharnierbereich (7) der Plattform (3) kompatible Aufnahme (16) aufweist.

2. Vorrichtung nach Anspruch 1, **dadurch gekennzeichnet, dass** mittels der Aufnahme (16) ein Verriegelungsgestänge (18) einer am Fahrzeug (2) vorgesehenen Zentralverrieglung (12) umgreifbar ist.

3. Vorrichtung nach Anspruch 1 oder 2, **dadurch gekennzeichnet, dass** die Vorrichtung (1) ein Profilstück (20) mit einer Innenkontur (21) umfasst, welche kompatibel ist zur Außenkontur (22) der Plattform (3)

4. Vorrichtung nach einem der Ansprüche 1 bis 3, **dadurch gekennzeichnet, dass** die Vorrichtung (1) einen Bolzen (19) umfasst, welcher mit dem Scharnierhaken (13) lösbar verbunden ist.

5. Vorrichtung nach einem der Ansprüche 1 bis 4, **dadurch gekennzeichnet, dass** die Vorrichtung mittels einer Spannkraft (F), welche bei in Verriegelungsstellung (Sv) befindlichem Scharnierhaken (13) vom Scharnierhaken (13) in Richtung Verriegelungsgestänge (18) ausgeübt wird, gegen die Plattform (3) gedrückt wird.

6. Vorrichtung nach einem der Ansprüche 1 bis 5, **dadurch gekennzeichnet, dass** die Vorrichtung eine Adapterelement (26) umfasst, welches lösbar mit dem Halteelement (11) verbunden ist.

7. Vorrichtung nach Anspruch 6, **dadurch gekennzeichnet, dass** das Halteelement (11) einen Verschlussbolzen (24) und das Adapterelement (26) eine Bohrung (25) zur Aufnahme des Verschlussbolzens (24) umfasst, so dass mittels des Verschlussbolzens (24) das Aufnahmeelement (11) an den Adapter gekoppelt werden kann.

8. Vorrichtung nach einem der Ansprüche 1 bis 7, **dadurch gekennzeichnet, dass** die Aufnahme (17) in Form eines Hakens (27) ausgeführt ist.

9. Vorrichtung nach Anspruch 8, **dadurch gekennzeichnet, dass** ein Verriegelungselement (23) vorgesehen ist, mittels dessen die Öffnungsweite (W) des Hakens (27) reduziert werden kann.

10. Vorrichtung nach Anspruch 9, **dadurch gekennzeichnet, dass** das Verriegelungselement (23) beweglich gelagert ist, wobei die Beweglichkeit bei montiertem Verschlussbolzen (24) blockiert und bei demontiertem Verschlussbolzen (24) gewährleistet ist.

## Claims

1. Apparatus for securing tensioning and/or lashing straps (10) to a vehicle (2), wherein the vehicle (2) comprises a platform (3) and platform gates (5) connected thereto by means of upper hinges (4) and lower hinges (15), and wherein the lower hinges (15) form a releasable connection which is formed by a hinge hook (13) and by a hinge pin (14) arranged on the platform gate (5), and wherein the apparatus comprises an adapter (26) which, at one end (8), has a receptacle (17) compatible with the hinge pin (14), and wherein the apparatus (1) furthermore has a holding element (11) for the securing of the tensioning and lashing straps (10), **characterized in that** the adapter (26) has, at its other end (6), a receptacle (16) compatible with the hinge region (7) of the platform (3) .

2. Apparatus according to Claim 1, **characterized in that** a locking bar arrangement (18) of a central locking means (12) provided on the vehicle (2) can be engaged around by means of the receptacle (16).

3. Apparatus according to Claim 1 or 2, **characterized in that** the apparatus (1) comprises a profile piece (20) with an inner contour (21) compatible with the outer contour (22) of the platform (3).

4. Apparatus according to any of Claims 1 to 3, **characterized in that** the apparatus (1) comprises a pin (19) which is releasably connected to the hinge hook (13) .

5. Apparatus according to any of Claims 1 to 4, **characterized in that** the apparatus is forced against the platform (3) by means of a clamping force (F) which, when the hinge hook (13) is situated in a locking position (Sv), is imparted by the hinge hook (13) in the direction of the locking bar arrangement (18).

6. Apparatus according to any of Claims 1 to 5, **characterized in that** the apparatus comprises an adapter element (26) which is releasably connected to the holding element (11).

7. Apparatus according to Claim 6, **characterized in that** the holding element (11) comprises a fastener pin (24) and the adapter element (26) comprises a bore (25) for receiving the fastener pin (24), such that the receiving element (11) can be coupled to the adapter by means of the fastener pin (24).

8. Apparatus according to any of Claims 1 to 7, **characterized in that** the receptacle (17) is designed in the form of a hook (27).

9. Apparatus according to Claim 8, **characterized in that** a locking element (23) is provided, by means of which the opening width (W) of the hook (27) can be reduced.

10. Apparatus according to Claim 9, **characterized in that** the locking element (23) is mounted in movable fashion, wherein the mobility is blocked when the fastener pin (24) is installed and is ensured when the fastener pin (24) is removed.

## Revendications

1. Dispositif de fixation de sangles de serrage et/ou d'arrimage (10) à un véhicule (2), le véhicule (2) comportant une plate-forme (3) et des ridelles (5) reliées à celle-ci par le biais de charnières supérieures (4) et de charnières inférieures (15), et les charnières inférieures (15) réalisant une liaison libérable, laquelle est réalisée par un crochet de charnière (13) et un axe de charnière (14) disposé sur la ridelle (5), et le dispositif comportant un adaptateur (26) qui comprend, à l'une de ses extrémités (8), un logement (17) compatible avec l'axe de charnière (14), et le dispositif (1) comprenant en outre un élément de retenue (11) servant à fixer les sangles de serrage et d'arrimage (10), **caractérisé en ce que** l'adaptateur (26) comprend, à son autre extrémité (6), un logement (16) compatible avec la zone de charnière (7) de la plate-forme (3).

2. Dispositif selon la revendication 1, **caractérisé en ce que** le logement (16) peut venir en prise autour d'une tringlerie de verrouillage (18) d'un verrouillage central (12) prévu sur le véhicule (2).

3. Dispositif selon la revendication 1 ou 2, **caractérisé en ce que** le dispositif (1) comporte une pièce profilée (20) dotée d'un contour intérieur (21), lequel est compatible avec le contour extérieur (22) de la plate-forme (3).

4. Dispositif selon l'une quelconque des revendications 1 à 3, **caractérisé en ce que** le dispositif (1) comporte un axe (19), lequel est relié de manière amovible au crochet de charnière (13) .

5. Dispositif selon l'une quelconque des revendications 1 à 4, **caractérisé en ce que** le dispositif est pressé contre la plate-forme (3) au moyen d'une force de serrage (F), laquelle est exercée par le crochet de charnière (13) en direction de la tringlerie de verrouillage (18) lorsque le crochet de charnière (13) se trouve dans la position de verrouillage (Sv).

6. Dispositif selon l'une quelconque des revendications 1 à 5, **caractérisé en ce que** le dispositif comporte un élément adaptateur (26), lequel est relié de manière amovible à l'élément de retenue (11).

7. Dispositif selon la revendication 6, **caractérisé en ce que** l'élément de retenue (11) comporte un boulon de blocage (24) et l'élément adaptateur (26) comporte un alésage (25) servant à loger le boulon de blocage (24), de manière à pouvoir accoupler l'élément de logement (11) à l'adaptateur au moyen du boulon de blocage (24).

8. Dispositif selon l'une quelconque des revendications 1 à 7, **caractérisé en ce que** le logement (17) est réalisé sous la forme d'un crochet (27) .

9. Dispositif selon la revendication 8, **caractérisé en ce qu'**un élément de verrouillage (23) est prévu, au moyen duquel la largeur d'ouverture (W) du crochet (27) peut être réduite.

10. Dispositif selon la revendication 9, **caractérisé en ce que** l'élément de verrouillage (23) est monté mobile, la mobilité étant bloquée lorsque le boulon de blocage (24) est monté et étant garantie lorsque le boulon de blocage (24) est démonté.
